# EUROPÄISCHE PATENTSCHRIFT

(11) **EP 3 033 561 B1**
(45) Veröffentlichungstag und Bekanntmachung des Hinweises auf die Patenterteilung: **10.10.2018**
(21) Anmeldenummer: 13765962.9
(22) Anmeldetag: 14.08.2013
(51) Int. Cl.: F16L 33/025

(54) **OHRKLEMME**
EAR CLAMP
COLLIER DE SERRAGE À OREILLE

(43) Veröffentlichungstag der Anmeldung: 22.06.2016
(73) Patentinhaber: Oetiker Schweiz AG, 8810 Horgen (CH)
(72) Erfinder: KENWRIGHT, Eric Thomas, Barrie, Ontario L4N 7M2 (CA)
(74) Vertreter: Strehl Schübel-Hopf & Partner
(86) Internationale Anmeldenummer: PCT/EP2013/067023
(87) Internationale Veröffentlichungsnummer: WO 2015/022024

(56) Entgegenhaltungen:
- EP-A1- 0 499 819
- DE-A1-102010 049 015
- DE-B- 1 133 952
- US-A- 2 876 514
- US-A- 3 235 925
- US-A- 4 222 155

## Beschreibung

### Stand der Technik

Zur dichten Verbindung zwischen einem Rohr und einem in dessen Ende eingeführten Gegenstand, etwa einem metallischen Rohrwinkel, werden Ohrklemmen verwendet, wie sie beispielsweise aus US 4,711,001 bekannt sind. Die bekannte Ohrklemme besteht aus einem Klemmband, in dem eine ohrartige Spanneinrichtung mit zwei nach außen ragenden Schenkeln und einem diese verbindenden Steg ausgebildet ist

Bei der Montage besteht die Schwierigkeit, dass die Klemme beim Spannen an ihrem Montageort festgehalten werden muss. Diese Schwierigkeit ist besonders groß, wenn das Rohr eine glatte Oberfläche hat, was etwa bei den in der Installationstechnik eingesetzten Werkstoffen wie PEX (vernetzten Polyäthylenen) der Fall ist, oder bei senkrecht verlaufendem Rohr, und ist insbesondere bei manueller Montage und beengten Montageverhältnissen hinderlich.

Der Versuch, den Innendurchmesser der Ohrklemme genau an den Außendurchmesser des Rohrs anzupassen, scheitert an den unvermeidbaren Toleranzen sowohl der Klemmen selbst als auch insbesondere der verwendeten Rohre. Auch bei sorgfältiger Fertigung besteht zwischen dem Innendurchmesser der Klemme und dem Außendurchmesser des Rohrs, für das die Klemme bestimmt ist, in der Regel ein Spiel von mindestens 1 mm.

Aus US 3,235,925 A und US 4,222,155 A sind weitere Ohrklemmen bekannt, die in den Zeichnungen dieser Patentschriften so dargestellt sind, als ob sie auch im nicht gespannten Zustand den Schlauch spielfrei umgeben. Es handelt sich aber um idealisierte Darstellungen, die die Verhältnisse im praktischen Einsatz der Schlauchklemme nicht zeigen. Die oben geschilderte Problematik ist auch hier gegeben.

Bei einer weiteren, aus DE 10 2010 049 015 A1 bekannten Anordnung wird eine Ohrklemme durch eine am Schlauch vorgesehene Verdickung in einer durch diese fest vorgegebenen Montageposition gehalten.

Bei einer aus EP 0 499 819 A1 bekannten Anordnung wird eine Ohrklemme bis zur endgültigen Fiixierung an der Montagestelle durch ein spezielles Einsatzelement gehalten, das seinerseits durch einen Flansch am Rohr gehalten wird.

### Abriss der Erfindung

Der Erfindung liegt die generelle Aufgabe zugrunde, die genannten Schwierigkeiten mindestens teilweise zu beseitigen. Eine speziellere Aufgabe der Erfindung kann darin gesehen werden, eine Kombination aus einem Rohr und einer Ohrklemme zum Abdichten des Rohrs gegenüber einem in das Rohr eingeführten Gegenstand sowie ein Verfahren zum Abdichten eines Rohrs gegenüber dem Gegenstand mittels einer Ohrklemme, anzugeben, wobei die Montage erleichtert ist.

Die Lösung dieser Aufgabe gelingt mit der in Anspruch 1 angegebenen Erfindung. Danach dient die an sich bekannte ohrartige Spanneinrichtung einem doppelten Zweck, nämlich zunächst der Anpassung des Klemmendurchmessers an den Durchmesser des Rohrs durch eine im Zuge der Klemmenherstellung vorgenommene -Vorverformung des Ohrs, und anschließend dem Spannen der Klemme im montierten Zustand. Mit dem vorverformten Ohr wird dessen Elastizität ausgenutzt, so dass sich die Klemme bei der Montage zwar an die gewünschte Stelle verschieben lässt, aber doch schon so fest auf dem Rohr sitzt, dass sie nicht von selbst rutschen kann.

### Kurzbeschreibung der Zeichnung

Die Erfindung wird nachstehend anhand der Zeichnung näher erläutert, die Querschnitte durch eine Ohrklemme im geschlossenen, aber noch nicht gespannten Zustand, wobei sich
Fig. 1 auf eine herkömmliche Ohrklemme und
Fig. 2 auf eine Ohrklemme gemäß einem Ausführungsbeispiel der Erfindung bezieht.

### Detaillierte Beschreibung

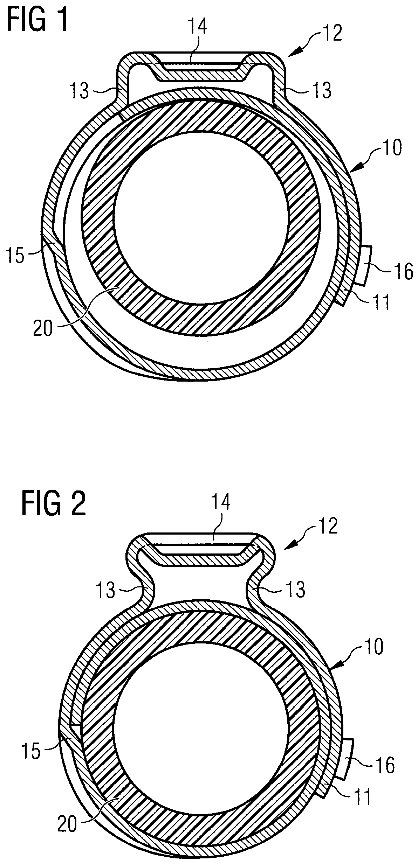

Die in Fig. 1 und 2 der Zeichnung dargestellte Ohrklemme besteht aus einem Klemmband **10**, das, ausgehend von seinem mit einem (nicht gezeigten Fenster) versehenen äußeren Ende **11** eine Spanneinrichtung in Form eines sogenannten "Oetiker-Ohrs" **12** mit zwei radial nach außen verlaufenden Schenkeln **13** und einem deren äußere Enden verbindenden Steg **14**, eine nach innen springende Stufe **15** und einen Haken **16** aufweist, der in dem dargestellten geschlossenen Zustand das Fenster am äußeren Klemmbandende durchsetzt. In den Steg **14** des Ohrs **12** ist eine ein Einknicken verhindernde Vertiefung eingeprägt. In beiden Figuren umgibt die Ohrklemme ein Rohr **20** an einer Stelle, an der ein (nicht gezeigter) Gegenstand, beispielsweise ein metallischer Rohrwinkel, in das Rohr eingreift.

In dem in Fig.1 veranschaulichten herkömmlichen Fall besteht zwischen dem Innendurchmesser der Ohrklemme und dem Außendurchmesser des Rohrs **20**, für das die Ohrklemme bestimmt ist, ein Spiel von mindestens 1 mm, um zu gewährleisten, dass sich die Klemme unabhängig von Toleranzen in den Dimensionen des Rohrs **20** und der Klemme selbst auf dem Rohr verschieben und an die gewünschte Montagestelle im Bereich des in das Rohr eingeführten Gegenstands bringen lässt. An dieser Stelle wird die Klemme dann durch Verengen des Ohrs **12** beispielsweise mittels eines zangenartigen Spannwerkzeugs um das Rohr **20** gespannt, um eine dichte Verbindung zwischen dem Rohr und dem Gegenstand herzustellen.

Da die Ohrklemme das Rohr **20** mit Spiel umgibt, muss sie während des Spannvorgangs an der Montagestelle festgehalten werden. Das ist insbesondere bei manueller Montage mühsam, weil gleichzeitig auch das Rohr und der eingeführte Gegenstand in der gewünschten Stellung zueinander gehalten werden müssen.

Die Schwierigkeit der Handhabung beim Spannen der Klemme ist dann besonders groß, wenn das Rohr **20** eine glatte Oberfläche hat, was beispielweise bei den in der Installationstechnik häufig verwendeten PEX-(Polyethylen-)Werkstoffen der Fall ist, und das Rohr an der Montagestelle gar noch senkrecht verläuft.

Die genannte Schwierigkeit ist bei der Fig. 2 dargestellten Ohrklemme behoben. Hier ist das Ohr **12** vor dem Aufbringen der Klemme auf das Rohr **10** so weit vorverformt, dass die Klemme das Rohr spielfrei umgibt. Die Vorverformung, die vorzugweise im Zuge der Klemmenfertigung erfolgt, lässt sich ohne Weiteres so ausführen, dass die von dem vorverformten Ohr vermittelte Elastizität das mühelose Aufbringen der Klemme auf das Rohr und ihr Verschieben an die Montagestelle gestattet, andererseits die Klemme an dieser Stelle und in der gewünschten, zum Spannen geeigneten Orientierung des Ohrs **12** gehalten wird.

### Bezugszeichen

- **10**: Klemmband
- **11**: äußeres Klemmbandende
- **12**: Ohr
- **13**: Schenkel
- **14**: Steg
- **15**: Stufe
- **16**: Haken
- **20**: Rohr

## Patentansprüche

1. Verfahren zum Abdichten eines Rohrs mit glatter Oberfläche gegenüber einem in das Rohr (**20**) einzuführenden Gegenstand mittels einer Ohrklemme, die ein Klemmband (**10**) aufweist, in dem eine ohrartige Spanneinrichtung (**12**) mit zwei nach außen ragenden Schenkeln (**13**) und einem diese verbindenden Steg (**14**) ausgebildet ist,
wobei die Spanneinrichtung (**12**) im Zuge der Klemmenfertigung vor der Montage der Ohrklemme auf dem Rohr so vorverformt wird, dass die Ohrklemme spielfrei auf das Rohr (**20**) passt,
die Klemme bei der Montage an die gewünschte Stelle auf dem Rohr (**20**) geschoben wird und
die Klemme durch weitere Verformung der Spanneinrichtung (**12**) so gespannt wird, dass der gewünschte Dichtungsdruck erreicht wird.

## Claims

1. A method for sealing a tube having a smooth surface against an object to be inserted into the tube (20) by means of an ear clamp, the ear clamp having a clamping band (10) in which ear-like tightening means (12) having two outward extending legs (13) interconnected by a web (14) is formed, wherein
the tightening means (12) is pre-deformed, in the course of manufacturing the clamp prior to being mounted on the tube, in such a manner that the ear clamp fits on the tube (20) free of play,
during installation the clamp is moved to the desired position on the tube (20), and
the clamp is tightened by further deformation of the tightening means (12) until the desired clamping pressure is obtained.

## Revendications

1. Procédé pour étanchéifier un tube ayant une surface lisse contre un objet devant être inséré dans le tube (20) au moyen d'un collier à oreille, le collier à oreille ayant une bague de serrage (10) dans laquelle un moyen de serrage de type à oreille (12) ayant deux pattes s'étendant vers l'extérieur (13) interconnectées par une bande (14) est formé, dans lequel
le moyen de serrage (12) est pré-déformé, au cours de la fabrication du collier avant d'être monté sur le tube, de telle manière que le collier à oreille s'ajuste sur le tube (20) sans jeu,
lors de l'installation le collier est déplacé jusqu'à la position désirée sur le tube (20), et
le collier est serré par déformation plus avant du moyen de serrage (12) jusqu'à ce que la pression de serrage désirée soit obtenue.
